(19)

Europäisches
Patentamt
European
Patent Office
Office européen
des brevets

(11) **EP 2 293 588 A1**

(12) **EUROPEAN PATENT APPLICATION**

(43) Date of publication:
**09.03.2011 Bulletin 2011/10**

(51) Int Cl.:
***H04N 13/00*** *(2006.01)*

(21) Application number: **09169012.3**

(22) Date of filing: **31.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Robert Bosch GmbH**
**70442 Stuttgart (DE)**

(72) Inventors:
• **Simon, Stephan**
**31079, Sibbesse (DE)**
• **Halimeh, Jad**
**76131, Karlsruhe (DE)**

(54) **Method for using a stereovision camera arrangement**

(57)     The invention provides for a method for using a stereovision camera arrangement and such an arrangement comprising at least two cameras (12, 14), each of the cameras (12, 14) acquires an image, so that a stereo image pair is captured by the stereovision camera arrangement and stereo matching is performed to achieve a disparity map for each image, whereby a blind disparity region (BDR) is defined and each image together with the corresponding disparity map is analysed to detect targets within the BDR.

Fig. 3

EP 2 293 588 A1

## Description

Technical field

The invention provides for a method for using a stereovision camera arrangement and such a stereovision camera arrangement.

Background art

Driver assistance systems (DAS) cameras and rain sensors currently co-exist in vehicles and work independently of each other. As both are usually located at nearly the same position (top middle section of the windshield, near the rear view mirror) and are often even provided by the same supplier, car manufacturers prefer the supplier to combine both types of functions (driver assistance functions like lane departure warning, road-sign recognition, obstacle detection, headlight control, etc. and rain detection) within a single system.

Stereovision cameras for DAS are about to enter the European market in the next years. Motor vehicles being provided with a stereovision camera arrangement or system, respectively will be available in the near future.

Stereo imaging techniques for the detection of raindrops that have so far been proposed seek to focus both images on the same patch of the windshield. Image subtraction or correlation are then used in order to detect the presence of the raindrop. Most of these systems, therefore, are stand-alone tools for raindrop detection and cannot be used for further image processing tasks needed in DAS. Others can be extended for more image processing tasks but they still require extra optics (to focus on the windshield patch being analysed) that future stereovision DAS will not include for any general purposes, and their visual information for general image processing tasks will be reduced as at least a portion of both images will have to be focused on the windshield patch according to the proposed designs.

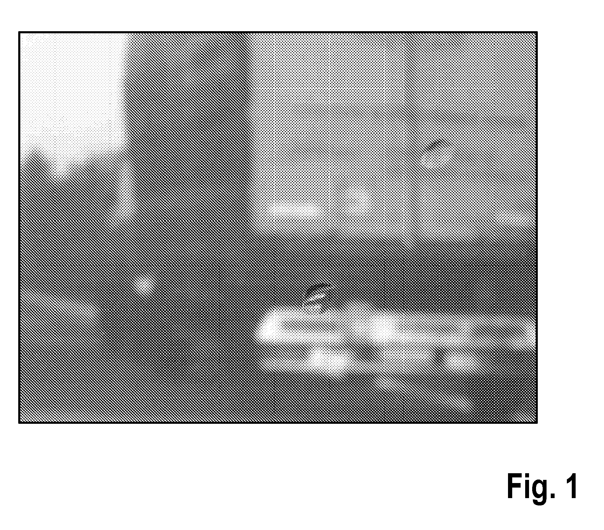

In U.S. Patent 6,617,564 B2, a raindrop sensor is disclosed that uses two sensor arrays, at least one optical system to image the same patch of a windshield onto both·sensor arrays, and a processing system to analyse the images for raindrop detection. This system uses a light-emitting diode in addition to the focusing optics. A form of binocular disparity is then utilised to detect raindrops. This system is sensitive to windshield inclination and has to be fixed properly and at certain angles with respect to a given windshield. Due to the really small volume being focused on by the system, this can lead to problems with respect to precision especially in harsh climates where windshields undergo shape deformation due to extreme temperature change or when the car navigates rough terrain. Moreover, since the distance from the optical center to the raindrop is much smaller than the distance from the raindrop to the scene it refracts, a small change in the viewing position from the left optical center to the right optical center (or in the raindrop position relative to the optical center as Figure 1 shows) leads to a large change in the scene refracted by the raindrop. This can cause errors or difficulties in the stereomatching especially because in this system the raindrops are in focus. In the disclosure of U.S. Patent 6,617,564 B2, no discussion is made as to how to handle this problem.

In U.S. Patent 6,596,978 B2, a somewhat similar system to U.S. Patent 6,617,564 B2 is discussed whereby two image sensors sense two images of the same patch of the windshield along two optical axes intersecting at a point adjacent to that patch surface. Extra optics are used for focusing. Correlation is then used to detect raindrops. Such a system is also sensitive to its positioning on the windshield and the type of terrain the car navigates. Also, the different viewing angles from one optical center to the second lead to significant changes in the features within the scene refracted by the raindrop on which the system focuses. This can lead to problems with the stereomatching.

In U.S. Patent Application 2007/0115357, a system is proposed whereby a primary camera is used to focus on the environment scene and a secondary camera is used to subtend the same patch of the windshield subtended in the field of view of the primary camera. Disturbances in the primary camera image are then analysed in the secondary camera image and the system proposed classifies the disturbances accordingly. Just like the two patents discussed above, this system is sensitive to its positioning along the windshield and the inclination of the system affects performance. It is proposed in U.S. Patent Application 2007/0115357 that a distinctive feature of raindrops are tri-points. A tri-point, as defined in U.S. Patent Application 2007/0115357, is a juncture where a bright region, a dark region, and a gray region intersect in a specific order (dark above bright, and gray to the left or right of both) and two such tripoints can be used to localize a raindrop. The patent application claims a detection rate of 80% but does not discuss in what kind of test images such results are attained. Such a raindrop classification method is not very accurate especially when the raindrop is in focus. In fact, such a classification method most likely yields a lot of false positives and misses a lot of true raindrops in a real environment.

Figure 1 shows an image of two raindrops on a windshield at which the camera focuses. Each raindrop refracts a large portion of the environment making its intensity independent of its background (the area of the environment that it obscures). This leads to a scene refracted by the raindrop that has several regions of varying brightness dependent on the complex environment the raindrop refracts.

As Figure 1 shows, a raindrop in focus can be shown to refract a large 3D environmental space and it captures a lot of its details when in focus. Hence, the inside of the raindrop is highly dependent on the structure of the environment and the windshield inclination. Windshield inclination plays a significant role in what the raindrop refracts, and hence this will cause big differences between detections carried out on a car windshield and those on a truck windshield, for example. Moreover, what U.S. Patent Application 2007/0115357 classifies as the gray region is not necessarily brighter or darker than either of what the patent classifies as two inner bright and dark regions. The raindrop intensity is to a large extent independent of its background (the area right behind it) while highly dependent on a large area in the environment that it refracts. Reference is made to [Garg & Nayar 07](Garg, Kshitiz; Nayar Shree K.: Vision and Rain. In: Int. J. Comput. Vision 75 (2007), Nr. 1, S. 3 - 27. - ISSN 0920-5691).

Figure 1 clearly shows two example raindrops that would most likely not be classified as raindrops by the method disclosed in U.S. Patent Application 2007/0115357.

All the three systems and their embodiments discussed above have a common problem and that is that they cannot be used for general stereovision DAS applications since they do not map the same environment scene (unless they use expensive extra optics). Since in each of these systems both sensors subtend in their fields of view the same patch of the windshield surface, this leads to both sensors subtending very different traffic scenes at distances 2 to 30 or 100 meters away from the stereovision system where the most interesting traffic scenes lie. Even if these systems are modified so that they still did manage to subtend the same environmental scene by using extra focusing optics to map the same patch of the windshield surface on parts of both image planes, this would lead to losing a lot of critical visual information in a stereovision DAS application. In DAS applications, visual information is vital to achieve a safe and convenient driving experience.

In U.S. Patent Application 2006/0082879, a system is proposed that includes a stereo optical module that images a region of the windshield that is overlapped in the common field of view (FOV) of the stereo optical module. A search range for short-range objects with large parallax (raindrops and other windshield obstructions) is carried out to detect such short-range objects in a time-sharing manner with a function that detects long-range objects with small parallax (such as objects in the traffic scene). The two functions can also be deployed interchangeably, but not at the same time, depending on the situation. Moreover, a method is proposed for detecting raindrops lying outside the common FOV, but only those that do not obscure any scene region in the common FOV. A color sheet for the detection of wetness-induced color change is used to detect raindrops in these regions, in addition to active-lighting techniques. The system uses a so-called pan-focus stereo optical system that establishes a depth of field (DOF) from the vicinity of the windshield to objects up to many tens of meters away, or, alternatively, extra focusing optics can be used to focus on the windshield for the detection of raindrops on the windshield. This system has a set-back in that it has to use a time-sharing method or a switch-mode method to detect raindrops and objects in the common FOV using stereo image data and this can lead to the loss of vital visual information. An optimal system would have to be able to detect both short-range and long-range objects at any one instant in time. Moreover, raindrops in the non-overlapping region that obscure a common FOV scene are not addressed in this patent application. Such a system, like the ones discussed before it, is also sensitive to position and inclination relative the windshield, since a proper search range to detect raindrops in the common FOV has to be set in accordance with the position and inclination of the system relative to the windshield.

In document [Tanaka et at. 06] (Tanaka, Yuu; Yamashita, Atsushi; Kaneko, Toru; Miura, Kenjiro T.: Removal of Adherent Waterdrops from Images Acquired with a Stereo Camera System. In: IEICE Transactions on Information and Systems (2006), S. 2021 - 2027), two stereo cameras subtend in their common FOV the same scene and the same windshield obstruction by setting a relatively very small baseline (2cm or less, depending on the application), often with aid of extra optics. The system detects raindrops or mud drops in the common FOV that lie on the protective glass of the stereo system by comparing disparities with the distance from the stereo cameras to the glass surface. This matching process is usually too expensive for DAS applications. The system requires a very small baseline that in certain situations it requires extra optics (halfmirror) so that the same environment scene is subtended while also capturing the same raindrops or mud drops in both images. A small baseline reduces the accuracy of the stereomatching and is not effective in DAS applications. The system, as described in the cited paper, does not realize real-time performance, rendering it ineffective in a DAS application. This system, like the four systems discussed before, works on subtending in the common FOV the same windshield patch, which is a main reason behind rendering this system and others non-optimal in DAS applications. This system, like the ones discussed before, is also sensitive to position and inclination relative to the windshield, since a proper search range to detect raindrops in the common FOV has to be set in accordance with the position and inclination of the system relative to the windshield.

Disclosure of the invention

The invention provides for an method for using a stereovision camera arrangement according to claim 1 and such an arrangement according to claim 15. Subject matter of the dependent claims define embodiments of the invention.

According to one embodiment of the invention disclosed in this application, raindrops are detected on the windshield without restricting the general purpose of stereovision DAS. This means the system is composed of two stereovision cameras viewing a scene in front of the car (and not on the windshield) where valuable targets (pedestrians, cyclists, motor vehicles, etc.) may be present. Using the properties of stereovision disparity, a model is proposed that detects raindrops on the windshield without using any extra optics to focus on the windshield surface. Therefore, this is the first such system to be proposed whereby stereovision-based raindrop detection is achieved in general-purpose stereovision DAS without incorporating any extra optics. Also, this is the first proposal that deploys a stereovision camera arrangement or system, respectively to detect raindrops by imaging two different, non-intersecting patches of the windshield surface.

This invention is also original in that it can be used to detect what is termed imminent hazards in a special region of the environment where disparity is nonexistent either because it is too expensive to estimate or because only one camera captures a target in that region. This region is termed the Blind Disparity Region (BDR) and will be discussed in detail later. Such imminent hazards, once detected, allow for more time for the system to react than it would otherwise. No other system has used this approach to detect such hazards or to even look for them using stereovision.

The invention disclosed herein allows for cheap and reliable depth estimation in a region of space so close to the stereovision system that disparity becomes too expensive to compute in a conventional stereomatcher leading to confusion in the system when objects lie in this close region which is outside the search range of the stereomatcher. Calculating disparity for objects in this region which extends from 0 to 2 or 4 m in front of the stereovision system is computationally daunting and more expensive than calculating the disparity for all other objects in the scene beyond this region. This close region is a subregion of the BDR, which will be described in detail later.

A stereovision camera arrangement is proposed for raindrop (and other windshield obstruction) and imminent hazard detection without having to alter any of the system generality for DAS applications. Other stereo imaging raindrop sensors have had to deploy an array of extra optical operatives (focusing lenses, light-emitting diodes, etc.) in order to achieve the same goal. Moreover, the prior art systems are very sensitive to the relative position of the windshield since the system must focus on a very small volume adjacent to the exterior windshield plane. The invention allows the stereovision system to detect raindrops while both cameras subtend the same environment scene in their fields of view, while the prior art systems are incapable of doing so as both cameras used subtend the same patch of the windshield surface in their fields of view.

Imminent hazards that have no depth defined due to their proximity to the stereovision system or to their location in regions of space subtended by only one of the two stereovision cameras (such as the engine hood and objects on it) are detected by the invention disclosed in this application. Moreover, depth estimation is performed at such imminent hazards if they are subtended by both fields of view of the stereo cameras.

Software based on an algorithm developed and termed Blind Spot Target Detection (BliSpTaDe) utilises the functionality of stereovision disparity and mimics behavior present in the human eye in order to achieve detection of raindrops, other windshield obstructions, and imminent hazards, and it can even be used to eliminate the visual effect of raindrops and other targets on the windshield much the same way the human eye would detect a spec of dust on one lens of a pair of eyeglasses and learn to interpolate around it. This capability is essential for future intelligent autonomous navigation vehicles and present day harsh-environment exploration robots.

The invention disclosed in this application allows for the simultaneous detection of far objects in the relevant traffic scene subtended by the common FOV of the stereovision system and close objects lying in the BDR (which will be discussed in detail later) which may or may not be subtended in the fields of view of both cameras at the same time.

A new proposal is disclosed that achieves the detection of raindrops and other obstructions on the windshield and imminent hazards in a region of the scene where disparity is not defined either because it is too expensive to calculate or because only one camera of the stereovision system images the target in that region.

The human eye has a blind spot occurring at the juncture in the retina where the optic nerve enters the eye. However, people cannot easily detect this blind spot due to the brain interpolating where the visual data is missing. Another fact is that when an eyeglasses-wearing person marks a dot on one of the lenses of his eyeglasses, his eye would not be able to establish good depth at the point in the scene covered by that drop and the person would experience an unpleasant sensation. This property is utilised, along with stereovision disparity, in order to detect raindrops on two different, non-intersecting patches of the windshield surface. This is due to the fact that given the proximity of the stereovision system to the windshield, a raindrop seen in the left image will not be captured by the right image, and vice versa. This generates a case similar to the dot-marked eyeglasses whereby the scene obscured by the raindrop will have a contradictory disparity value.

Imminent hazards in the BDR (to be described later) are also detected using this same property. Such imminent hazard detections fill a gap present in the visual information provided by the stereovision system whereby such detections are given a range of possible depth values at any one instant in time without using depth from motion by a single camera or disparity maps (since disparity is non-existent in that region). This allows the system to have good knowledge of where such imminent hazards lie at any one frame without resorting to the time-consuming process of depth from motion estimation that requires at least two frames be processed which can prove dangerous in DAS applications where one second can mean the difference between a safe driving experience and a grave accident.

An embodiment of the invention builds on the following assertions:

1. A stereovision camera system is positioned in the car for general-purpose DAS functionality.

2. A raindrop or windshield obstruction in the image of the left camera cannot be in the image captured by the right camera (and vice versa) at a certain instant in time due to the fact that the windshield is too close to the stereovision system whereby the sections of the windshield mapped by each camera are non-intersecting.

3. Targets in the BDR are either imaged by just one camera of the stereovision system or, if imaged by both, have no disparity defined since they lie so close to the system that estimating disparity at these targets is too expensive.

4. An interest point detected by a feature descriptor such as Speeded-Up Robust Feature (SURF) [Bay et al. 06] (Bay, Herbert; Tuytelaars, Tinne; van Gool, L.: SURF: Speeded Up Robust Features. In: 9th European Conference on Computer Vision. Graz Austria, Mai 2006) or Scale Invariant Feature Transform (SIFT) can be detected by the stereomatcher used in the stereovision system and given a disparity value, unless the interest point is exclusive to one image and does not exist in the second or it lies so close to the camera that its disparity is too expensive to calculate.

This invention can also serve as an imminent-hazard detection system enabling the detection of hazards in a certain region we call the Blind Disparity Region (BDR) in which hazards go unnoticed by a stereodepth estimator. BDR hazards can be detected by using a monocular camera but then depth from motion would have to be performed and that means less time to react since at least two frames have to be processed. The invention allows for the detection of such hazards at anyone instant in time, using just one stereo image pair. This is done by the same method used for raindrop and other windshield obstruction detection.

Brief description of the drawings

Figure 1 shows an image of two raindrops on a windshield

Figure 2 shows a configuration of two stereovision cameras

Figure 3 shows another view of configuration in Figure 2.

Figure 4 shows the volume of the BDR.

Figure 5 shows a schematic flow diagram of the proposed method.

Figure 6 shows examples of targets.

Figur 7 shows examples of targets.

Figure 8 shows a stereo image pair.

Description of embodiments sp

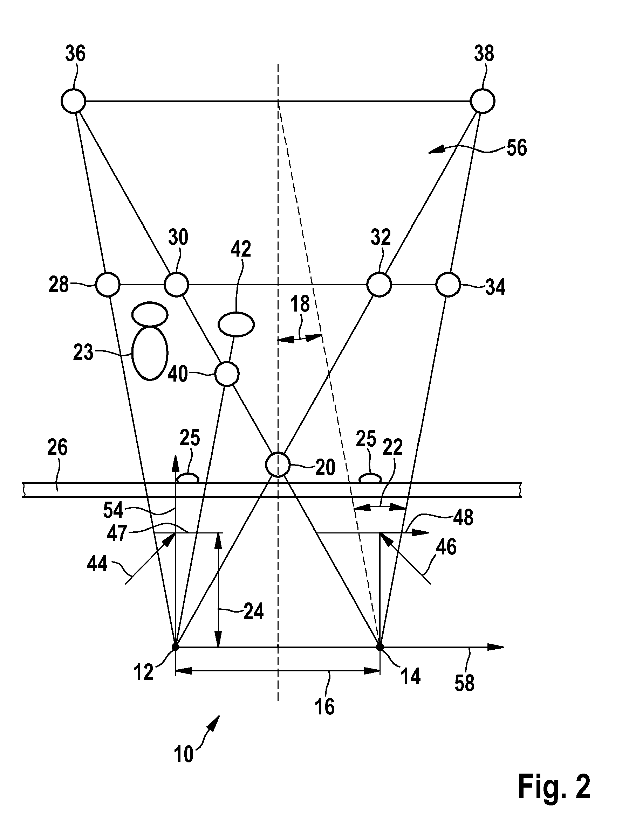

Figure 2 shows a configuration of the two driver assistance stereovision cameras and a horizontal cut through the scene they subtend in their fields of view with an example active BDR target 23 and two raindrops 25 as passive BDR targets.
The setup of a stereovision camera arrangement is depicted in Figure 2, generally designated by reference number 10. Two passive stereovision cameras 12 ($O_L$) and 14 (OR) are positioned such that the baseline is b (reference number 16) and they are both tilted towards each other at an angle θ (reference number 18) relative to the line perpendicular to the baseline 16 from point J (reference number 20). The FOV of each camera is 2 * α (reference number 22). Epipolar image rectification is performed (advantageously, not necessarily). The focal length of each camera 12, 14 is f (reference number 24). The horizontal distance from the arrangement 10 to a windshield 26 is of little importance and can be varied over a range of values. Moreover, the inclination of the cameras 12 and 14 relative to the windshield 26 is also insignificant and does not affect the performance of the arrangement 10. The same goes for the angle the stereovision DAS makes with the ground. The cameras 12 and 14 focus at infinity or at another large distance and at no time are any extra optics needed to focus on any region of the windshield. The setup maintains the generality of stereovision DAS in order to effectively perform any image processing tasks required to achieve a safe and comfortable driving experience. It is to be noted that the system can also operate successfully while focusing at short distances; however, since we aspire for general-purpose stereovision DAS functionality, focusing such that the depth of field region includes infinity is more desirable and beneficial in such an invention. The Blind Disparity Region (BDR) is defined as the 3D region in space that lies closer than a minimum depth equal to f * b/$d_{max}$, where $d_{max}$ is the maximum disparity, and that is subtended in the field of view of at least one camera 12 and/or 14 of the stereovision camera arrangement 10. This region includes two volumes with either volume mapped by one camera 12 or 14 but not the second, and a volume mapped by both cameras 12 and 14 but where the space is so close to the stereovision camera arrangement 10 that disparity is too expensive to calculate. The BDR for the stereovision DAS is cut through, by the plane containing the baseline 16 and at least one of the optical axes of the stereovision system, at the polygons QCJO$_L$ and PHJO$_R$ and triangle CJH.

Q designated by 28
C designated by 30
H designated by 32
P designated by 34
A designated by 36
D designated by 38
M designated by 40
T designated by 42
arrow 44 indicates left image principle point
arrow 46 indicates right image principle point
arrow 47 X$_L$ indicates left image plane (rectified image)
arrow 48 X$_R$ indicates right image plane (rectified image)

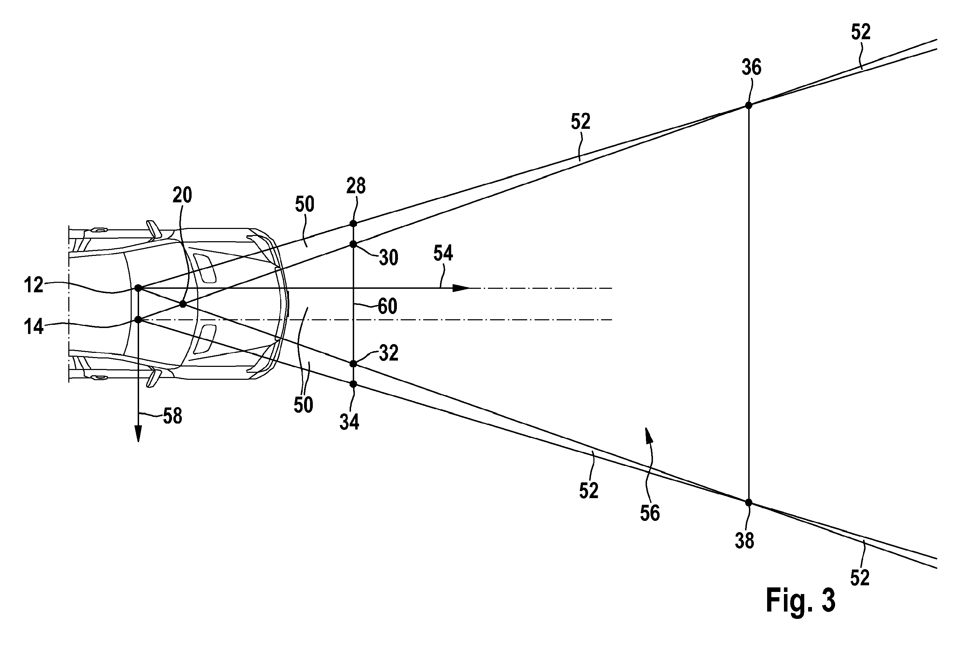

Figur 3 shows regions of interest in the BDR close and wide marked with arrows 50 and no-interest regions of the BDR (arrows 52) which are to narrow and/or too far away. Furthermore arrow 56 indicates a region (CHDA) where distinctive features collect well-defined disparity values.

Figure 3 shows another view of the configuration (cf. Figure 2) with practically more relevant dimensions. Indicated are the relevant and irrelevant regions where the stereovision system is disparity-blind. The relevant regions are defined as the significant BDR in which imminent hazards, windshield obstructions (such as raindrops), and other targets are to be detected.

As can be seen in Figure 3, there are more regions subtended by only one camera but these become too narrow and/or too far away beyond QP in the cut-through of the BDR and so we may neglect them for our purposes. As Figure 3 also shows, the 3D coordinate system is (without loss of generality) defined such that the center is at O$_L$. The Z-axis 54 extends along the line perpendicular to the baseline and lying in the plane containing the baseline and at least one of the optical axes of the cameras, with positive direction away from the car. The X-axis 58 is parallel to the baseline with positive direction from 0$_L$ to O$_R$. The Y-axis is perpendicular to the X-axis 58 and the Z-axis 54 and points towards the ground.

Referring to Figure 2, point J 20 is equidistant from the optical centers and since it is the intersection of lines (O$_R$A) : Z = - cot($\alpha$ + $\theta$) · X + b·cot($\alpha$ + $\theta$) and (O$_L$D) : Z = cot($\alpha$ + $\theta$) · X, its coordinates are determined to be

$$X_J = \frac{b}{2}$$

$$Z_J = \frac{b}{2} \cdot \cot(\alpha + \theta)$$

Point A 36 is the intersection of lines (O$_R$A): Z = -cot($\alpha$ + $\theta$) · X + b·cot($\alpha$ + $\theta$) and (O$_L$A) : Z = -cot($\alpha$ - $\theta$) · X, which yields the coordinates of point A:

$$X_A = b \cdot \frac{\cot(\alpha + \theta)}{\cot(\alpha + \theta) - \cot(\alpha - \theta)}$$

$$Z_A = -b \cdot \frac{\cot(\alpha + \theta) \cdot \cot(\alpha - \theta)}{\cot(\alpha + \theta) - \cot(\alpha - \theta)}$$

Point D 38 is the intersection of lines $(O_RD)$ : $Z = \cot(\alpha + \theta) \cdot X - b \cdot \cot(\alpha + \theta)$ and $(O_LD)$ : $Z = \cot(\alpha + \theta) \cdot X$, which yields the coordinates of point D 38:

$$X_D = b \cdot \frac{\cot(\alpha - \theta)}{\cot(\alpha - \theta) - \cot(\alpha + \theta)}$$

$$Z_D = b \cdot \frac{\cot(\alpha - \theta) \cdot \cot(\alpha + \theta)}{\cot(\alpha - \theta) - \cot(\alpha + \theta)}$$

$Z_A$ and $Z_D$ are equal and they mark the depth at which the fields of view of both cameras intersect. We term line segment AD the intersection waistline, Hence the intersection waistline depth is

$$Z_{waistline} = Z_A = Z_D = -b \cdot \frac{\cot(\alpha + \theta) \cdot \cot(\alpha - \theta)}{\cot(\alpha + \theta) - \cot(\alpha - \theta)}$$

and the intersection waistline thickness is

$$t_{waistline} = X_D - X_A = b \cdot \frac{\cot(\alpha - \theta) + \cot(\alpha + \theta)}{\cot(\alpha - \theta) - \cot(\alpha + \theta)}$$

It is to be noted that points A 36 and D 38 may be at infinity or not existent (i.e., the fields of view of both cameras do not intersect at a specific line AD), but in Figure 2 we depict the practically most relevant case (line AD can be before QP, but that is not a relevant case).
The disparity at any pixel belongs to a range of values [0, $d_{max}$] where $d_{max}$ is the disparity value beyond which objects become so close that calculating disparity at them becomes too expensive for the stereomatching algorithm. Targets in this region cannot be matched and, hence, the stereovision arrangement 10 is also disparity-blind there. This region is included in the BDR and is the one whose cut-through is triangle CH J excluding segment CH as shown in Figure 2. Knowing that lines (CH) : $Z = f \cdot b / d_{max}$ and $(O_LA)$ : $Z = -\cot(\alpha - \theta) \cdot X$ intersect at point Q 28, the coordinates of the latter are determined to be

$$X_Q = -\frac{f \cdot b}{d_{max} \cdot \cot(\alpha - \theta)}$$

$$Z_Q = \frac{f \cdot b}{d_{max}}$$

Moreover, knowing that lines (CH) : $Z = f \cdot b/d_{max}$ and $(O_RD)$ : $Z = \cot(\alpha - \theta) \cdot X - b \cdot \cot(\alpha - \theta)$ intersect at point P 34, the coordinates of the latter are determined to be

$$X_P = b \cdot \left(1 + \frac{f}{d_{max} \cdot \cot(\alpha - \theta)}\right)$$

$$Z_P = \frac{f \cdot b}{d_{max}}$$

Similarly, points $C = (QP) \cap (O_RA)$ and $H = (QP) \cap (O_LD)$ are determined to have the following X-coordinates

$$X_C = b \cdot \left(1 - \frac{f}{d_{max} \cdot \cot(\alpha + \theta)}\right)$$

$$X_H = \frac{f \cdot b}{d_{max} \cdot \cot(\alpha + \theta)}$$

while both points have the same depth $Z_{min} = f \cdot b/d_{max}$.
$Z_{min}$ designated by 60
The cut-through of the BDR by the plane containing the baseline and at least one of the optical axes of the stereovision arrangement 10 has an area S that is equal to the area of the trapezoid $QPO_RO_L$ minus the area of triangle $JO_RO_L$.
This gives

$$S = \frac{f \cdot b^2}{d_{max}} \cdot \left(1 + \frac{f}{d_{max} \cdot \cot(\alpha - \theta)}\right)$$

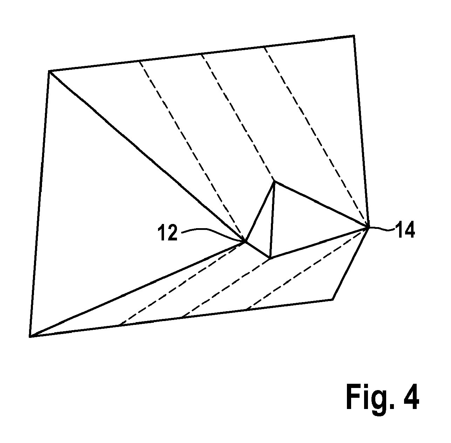

This area is the cut-through of the volume of the BDR. The latter, shown in Figure 4, is also calculated as the volume of the line-apex pyramid (pyramid whose apex is a line instead of a point) at $O_LO_RPQ$ minus the volume of the tetrahedron at $O_LJO_R$, yielding

$$V_{BDR} = \frac{H_{image} \cdot f^2 \cdot b^3}{24 \cdot d_{max}^3} \cdot U$$

where

$$U = \frac{16}{\cot(\alpha - \theta)} + 12 \cdot \frac{d_{max}}{f} - \left(\frac{d_{max}}{f}\right)^3 \cdot \cot^2(\alpha + \theta)$$

and $H_{image}$ is the height of the camera image in pixels.

For a stereovision DAS where $\theta = 0.7°$, f = 820 pixels, and b = 28.5 cm, a maximum disparity $d_{max}$ = 120 pixels yields S = 2.12 m$^2$ and $V_{BDR}$ = 1.5 m$^3$.

For $d_{max}$ = 60 pixels (which usually covers almost all targets in a scene subtended in a 480 x 640 (height by width) image and is hence preferred in applications for speed), the area is S = 7.35 m$^2$ and the BDR volume is $V_{BDR}$ = 10.76 m$^3$. With either value of the maximum disparity, the values we get for S and $V_{BDR}$ are considerable and hence significant. Moreover, looking beyond area and volume and looking at the range extended by the BDR, for $d_{max}$ = 60 pixels, points Q and P are 3.9 m in front of the optical centers of the stereovision cameras with point Q lying at 1.6 m to the left of the left optical center and point P lying at 1.6 m to the right of the right optical center. This shows quantitatively how important it is to detect active targets in the BDR, such as a child running onto the road after a ball or a traffic poll the driver is not paying attention to while parking a car.

In the BDR, hazards go undefined in the disparity map provided by the stereo-macher of the system and this has been a challenge in DAS and stereovision in general. Our system utilises a property inherent to the human eye that allows the detection of targets in the BDR. In our application, BDR targets are classified into active targets (imminent hazards) and passive targets (a raindrop or other windshield obstruction, the engine hood or still objects on the engine hood, for example). The ability to detect these imminent hazards is critical. Monocular vision systems, even with reliable depth from motion algorithms, do not provide fast-enough detection for hazard avoidance and this can mean the difference between a safe ride and a serious accident. Current stereovision algorithms lose their stereo privilege in the BDR since the disparity map is blind there as one and only one of the two cameras can capture the imminent hazard at anyone point in time or the hazard lies in the region of the BDR where it is subtended in both fields of view of the stereo system cameras (common view BDR target), but its disparity still goes undefined since depth estimation in that close region is too expensive to perform. The present invention allows for robust active and passive BDR target detection using stereo disparity and monocular vision techniques, and it also provides cheap and fast depth estimation for common-view BDR targets.

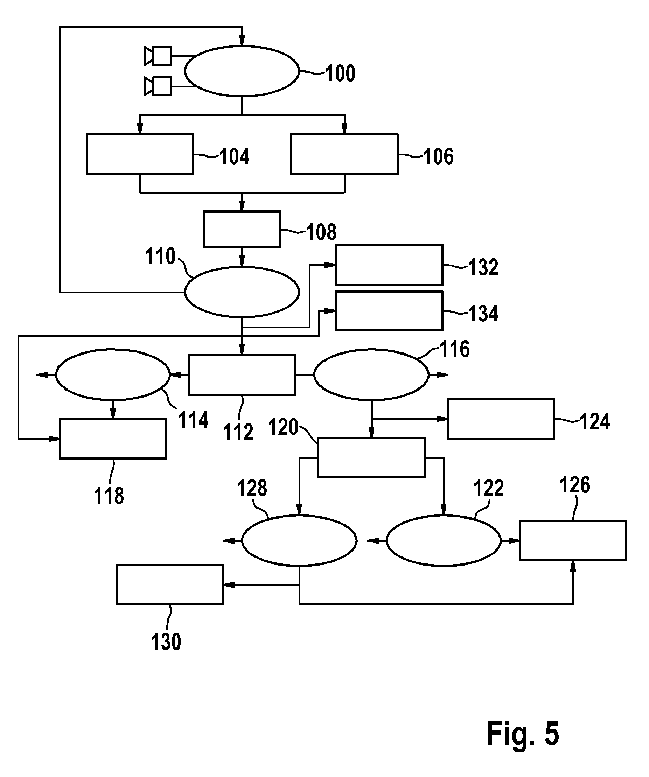

A schematic flow diagram of an embodiment of the invention is depicted in Figure 5. A stereo image pair is captured by the stereovision arrangement (step 100) and stereo matching is performed to achieve a disparity map for each image, while a form of interest point detection is carried out (step 104) on each of the two images. Estimation of the disparity map is performed in step 106.

As Figure 2 shows, in the case of targets in the BDR, parts of the scene in front of the two cameras will be seen by one camera and not the other, much the same way as when a finger is placed too close to one eye such that it is only seen by that eye and not the other, and that leads to contradictions in the disparity map wherever the map is well-defined, creating areas of undefined disparity. Areas of undefined disparity can be smooth, non-textured planes in the environment, occlusions, or BDR targets. BDR targets will exhibit features at which no disparity is defined, and this will rule out the possibility of a smooth, non-textured surface, or else such features would either not exist on such a surface or they would and also collect depth estimates, which they do not do in this case. Based on the fourth assertion, this leaves two other possibilities: occlusions or BDR targets. A distinctive property of an occlusion is that its thickness along an epipolar line is equal to the absolute value of the difference in the disparities adjacent to it on either side. This distinctive characteristic is utilised in our system to differentiate between occlusions and BDR targets. In the case when the BDR target is laid over a smooth, non-textured region of the scene, the fourth assertion is also raised since the BDR target would yield features at which no disparity is defined. As it does not satisfy the occlusion thickness property, the BDR target is correctly classified by our system. The algorithm we use for BDR target detection is called the Blind Spot Target Detector (BliSpTaDe) (step 108).

Even if the target lies in the region of the BDR where it is subtended in both fields of view of the stereovision system, it will have no defined disparity since depth estimation in that region is too expensive to perform due to how close that region is to the stereovision system. This will lead to contradictions in the disparity map much the same way as in the case discussed for BDR targets subtended in the field of view of only one camera. BliSpTaDe also detects a BDR target in a disparity map in this case based on the fourth assertion.

Now that a BDR target is determined to exist in a given undefined disparity region in the disparity map, BliSpTaDe further processes both images in and around the projected regions of the undefined disparity region to determine in which image the BDR target(s) causing or contributing to that undefined disparity region lies(lie). We define a projected region of a BDR target-related undefined disparity region in the disparity map of an image as the region in that image that has the same position, shape, and size as the BDR target-related undefined disparity region in the disparity map of that image. We note that contour edging signifies that a large portion of the contour of a projected region is occupied by edges in an image and inner edging means only an insignificant portion of the contour of the projected region is occupied by edges (though edges in the inner part of this area can exist). We now consider all the different possible cases that are also summarized in Table 1. Even though the undefined disparity projected region is depicted the same size and shape from one image to the other in Table 1, that is not necessarily the case. The size and shape of the projected regions - which we use to study whether or not a BDR target lies there - in each image onto which an undefined disparity region projects depend on the geometry (size and shape) of the scene the BDR target obscures and on the geometry of the BDR target as well.

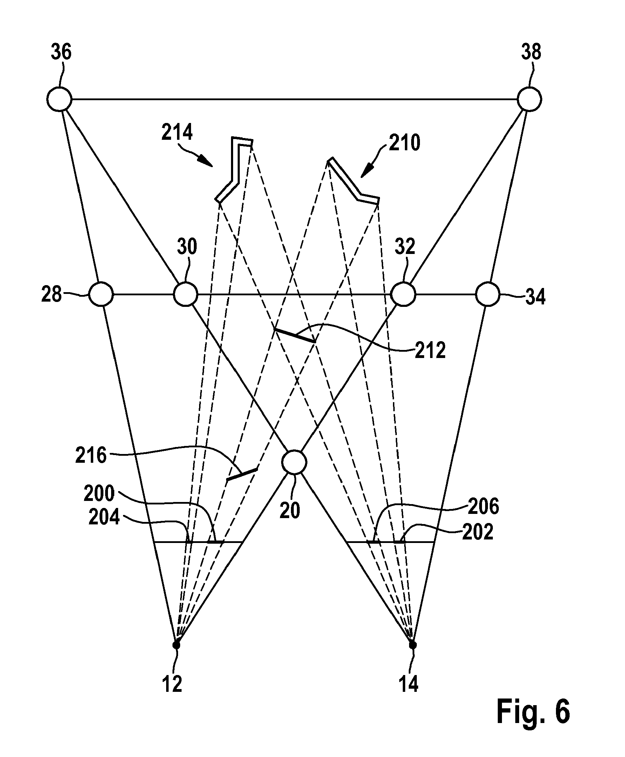

Figure 6 shows two examples, one with a non-common-view BDR target 216 and a second with a common-view BDR target 212, to illustrate the dependency of the shape and size of the projections of a BDR target-related undefined disparity region onto each image.

As Figure 6 shows in one example, a non-common-view BDR target 216 causes an undefined disparity region that projects onto the BDR target region (Region II (reference number 200)) in the left image where the non-common-view BDR target is subtended and onto its shadow Region IV (reference number 202) in the right image where the non-common-view BDR target 216 is not subtended. The geometry of Region II 200 in this case is directly dependent on the geometry of the non-common-view BDR target 216, while its shadow Region IV 202 is directly dependent on the geometry of the 3D scene region R obscured by the non-common-view BDR target 216 in the left image (and, hence, indirectly dependent on the geometry of the non-common-view BDR target 216). A common-view BDR target 212 causes two undefined disparity regions in the disparity map of either image: one because it cannot be matched and a second because it obscures a unique scene region in the second image causing a corresponding shadow region in the first image. As Figure 6 shows in a second example, these two undefined disparity regions project onto four regions: Regions I to IV (two in each image).

Region I 204 in the left image is the shadow of Region III 206 in the right image, and its geometry directly depends on the geometry of scene region L 214 obscured by the common-view BDR target 212 in the right image and, hence, indirectly depends on the geometry of the common-view BDR target 212. Region III 206, however, has geometry that directly depends on that of the common-view BDR target 212. Similarly, Region IV 202 in the right image is the shadow of Region II 200 in the first image, and its geometry is directly dependent on the geometry of 3D scene region R (reference number 210) obscured by the common-view BDR target 212 in the left image and, hence, is indirectly dependent on the geometry of the common-view BDR target 212. On the other 'hand, the geometry of Region II 200 is directly dependent on the geometry of the common-view BDR target 212 in this second example (which does not include the non-common-view BDR target from the first example). As a general rule, the geometry of an undefined disparity region in the left image disparity map is congruent (same size and shape) to the geometry of the region it projects to on the left image, and the same goes for the right image. Moreover, the undefined disparity region in the left disparity map will have the same position as the region it projects onto in the left image. For simplicity, the BDR target regions and their corresponding shadow regions are depicted congruent in Table 1. The cases summarized in Table 1 are discussed in the following:

Table 1: Cases of undefined disparity regions related to BDR target presence and the methods used in each to locate the BDR target in an image.

| Image 1 | Image 2 | BLiSpTaDe process | Outcome |
|---|---|---|---|
| No edges | Contour edging | Contour matching | If a match occurs, then BDR target in image 2, otherwise, smooth BDR target in image 1 |
| No edges | Inner edging | No contour matching | Non-smooth BDR target in image 2 laid over a smooth region of the scene |

(continued)

| Image 1 | Image 2 | BLiSpTaDe process | Outcome |
|---------|---------|-------------------|---------|
| Contour edging | Contour edging | Contour matching | Wherever a match occurs, a BDR target is located |
| Contour edging | Inner edging | Contour matching | If a match occurs, then non-smooth BDR target in image 1, otherwise, a smooth BDR target in image 2 laid over a textured scene region |
| Inner edging | Inner edging | No contour matching | A BDR target in each image both laid over a smooth scene region |

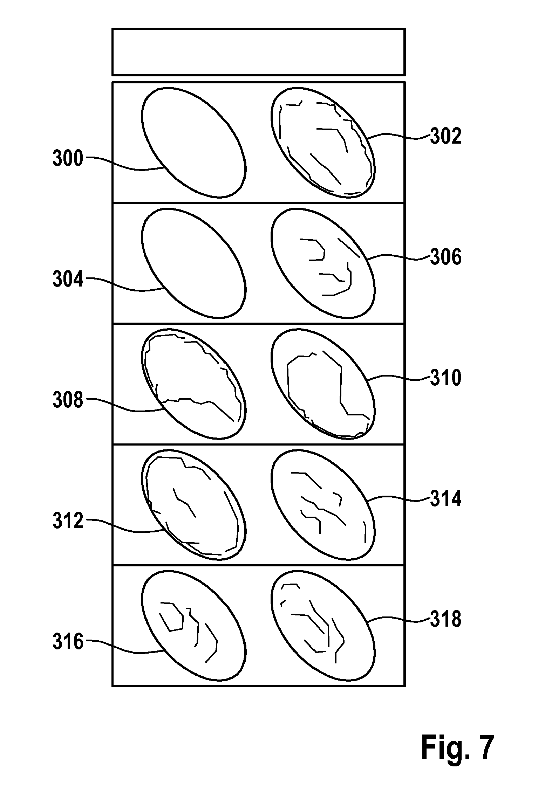

Figure 7 shows examples for the cases defined in Table 1.

1. No edges in image 1 (reference number 300), contour edging in image 2 (reference number 302). Since no edges exist in the projected region in image 1, this means either a smooth scene in image 1 obscured by a BDR target in image 2 or a smooth BDR target in image 1 obscuring some scene region in image 2. However, we have contour edging in image 2 and so contour matching is performed.

If a match occurs; this means a BDR target lies in image 2 and obscures a smooth scene in image 1. Otherwise, if the match fails, image 2 does not contain a BDR target and, hence, a smooth BDR target lies in image 1 that obscures a textured scene in image

2. No edges in image 1 (reference number 304), inner edging in image 2 (reference number 306). Since no edges exist in the projected region in image 1, this means either a smooth scene in image 1 obscured by a BDR target in image 2 or a smooth BDR target in image 1, According to image 2, this means a non-smooth BDR target in image 2 laid over a smooth scene region. Intersecting both cases implies that those edges are due to a non-smooth BDR target in image 2 laid over a smooth surface. No contour matching is needed or possible here.

3. Contour edging in image 1 (reference number 308), contour edging in image 2 (reference number 310). This can be only due to one or two (or more) non-smooth BDR targets in one or both projected regions laid over a textured part of the scene. Contour matching is performed, and BliSpTaDe determines which edges in which projected region of each image contribute to the contour of each projected region. This leads to determining where the BDR target lies and whether BDR targets exist in both images if so happens the case that edges in both projected regions contribute to the contour of their corresponding projected region. Using contour matching we can also segment the undefined disparity region in a disparity map into two (or more) subregions each caused by one of the two (or more) BDR targets (which lie in different images in the projected regions of that undefined disparity region).

4. Contour edging in image 1 (reference number 312), inner edging in image 2 (reference number 314). Here contour matching is performed on image 1 edges.

If there is a match, then this means there is a non-smooth BDR target subtended in image 1. Otherwise, if no match occurs, it is concluded that a smooth BDR target lies in image 2 and obscures a textured scene region.

5. Inner edging in image 1 (reference number 316), inner edging in image 2 (reference number 318). This case implies two non-smooth BDR targets both of which are laid over a smooth scene region. No contour matching is needed or possible in this case.

When a BDR target is detected, it is possible that it may be a common-view BDR target, i.e. a BDR target subtended in both fields of view of the stereovision camera system. Such a target is difficult to assign a disparity value to as it is so close to the stereovision system that disparity estimation becomes too expensive at it. In the invention disclosed in this patent application, a scheme is applied to achieve cheap, reliable disparity estimation at such targets that would otherwise be too expensive for a regular stereomatcher to compute.

Referring to Figure 2, it can be seen that relative the left camera, the projection of a BDR target onto the BDR cut-through plane can lie in triangle $O_LCQ$, $O_LCJ$, or CHJ. As Figure 2 also shows, taking the left image x-axis to be along the horizontal with positive direction to the right, the image x-coordinate of point C relative the left image principle point (rectified virtual camera system) is

$$x_C = \frac{f \cdot X_C}{Z_C}$$

Any BDR target, therefore, with left image x-coordinates less than $X_C$ can be ruled out as a common-view BDR target. BDR targets with left image x-coordinates greater than or equal to $X_C$ are either common-view BDR targets or non-common view BDR targets with cut-through projections lying in triangle $O_L CJ$. These targets are assumed common-view BDR targets and matching based on a scheme we will discuss shortly is performed. If the target is indeed a common-view BDR target, matching will succeed as this target will be a common feature in both images. If it is a BDR target whose cutthrough projection lies in triangle $O_L CJ$, no match will be found, thus, proving by way of contradiction that it is not a common-view BDR target. In Figure 2, a common-view BDR target is shown. A light ray going from its cut-through projection point T to the optical center of the left camera intersects line $O_R C$ at point M. The left image x-coordinate of M (which is also that of T) relative the left principle point is known and it is $X_M$. From it, the following relationship between the real-world coordinates of point M is obtained

$$X_M = \frac{Z_M \cdot x_M}{f}$$

Since point M lies on line $O_R C$, its real-world coordinates also have the relationship

$$Z_M = -\cot(\alpha + \theta) \cdot X_M + b \cdot \cot(\alpha + \theta)$$

Solving both equations for $Z_M$ yields

$$Z_M = \frac{f \cdot b \cdot \cot(\alpha + \theta)}{f + x_M \cdot \cot(\alpha + \theta)}$$

This corresponds to the disparity $d_M$ at M and at any point lying on the line in the cut-through plane that passes through M and is parallel to the baseline, where

$$d_M = \frac{f \cdot b}{Z_M} = \frac{f}{\cot(\alpha + \theta)} + x_M$$

As Figure 2 shows, this restricts the disparity values of the common-view BDR target in the range $I_{disparity} = (d_{max}, d_M]$, where $d_M > d_{max}$, but $d_{max}$ is the maximum disparity value the stereomatching algorithm can compute. $I_{disparity}$ defines a matching window beyond which the BDR target, if common-view, cannot exist in the right image.

Knowing that a common-view BDR target feature in the left image has to also be a common-view BDR target feature in the right image, we look for BDR targets in the right image with common-view BDR target right image x-coordinates (requirement 1). This means that the common-view BDR target must have a right image x-coordinate less than $X_H$, where $X_H$ is the right image x-coordinate of point H relative the right principle point. For a common-view BDR target in the left image, it is expected that a matching feature in the second image would have the same image y-coordinate value (requirement 2) as they lie on the same epipolar line, restricting our search even further. This leads to intersecting the area mapped by the matching window with the positions of the features satisfying the common-view BDR target requirements 1 and 2, and in turn leading to fast depth estimation that is otherwise too expensive with a general stereomatcher. This is a novel way of depth estimation achieved cheaply and reliably by our contrived system even in the region where disparity is too expensive to be computed by the stereomatcher.

Once a BDR target is detected (step 110) and located in an image, it is classified (step 112) by an BDR target classifier as either an active target 114 or a passive target 116. An active target is defined as a target whose contour significantly changes and/or moves with time. A passive target is a target whose contour does not significantly change with time. A passive target is then the engine hood or a part of it (if in the field of view of either camera) or any still object on the hood that may be subtended by the field of view of either camera or both, in addition to windshield obstructions, which would be subtended by the field of view of just one camera. Classification is performed by making use of the contour properties of each class of targets. The contour of an active target changes significantly with time due to the change of relative motion between the target and the stereovision system. On the other hand, the contour of a passive target typically changes very slightly even if it is a moving raindrop. On this basis, the BDR targets are classified into active targets and passive targets.

Once an active target is classified, a proper warning signal can be activated (step 118) as shown in Figure 5, or immediate action can be taken by the system itself in case the hazard is too imminent. However, a warning signal can also be activated as soon as any BDR target is detected.

A passive target can either be a raindrop or any other kind of windshield obstruction or a still object on the engine hood or the engine hood itself (or part of it) if imaged by either camera or both. A raindrop classifier developed is then used that takes advantage of the distinctive closed-loop structure of the raindrop contour (step 120). Other windshield obstructions such as dirt, mud, or bugs and engine hood objects do not exhibit such a property in their contour and, hence, will be classified as non-raindrops (step 122).

The invention disclosed in this application also has the capability of eliminating the visual effects of passive targets. This feature is important in autonomous applications such as a harsh-environment robotic explorer that may suffer a lens crack or gather dust particles or mud on its camera lenses. These passive targets need to be dealt with in order for the robot to perform its regular image processing tasks. Another important application is stereo surveillance camera systems that get mud or raindrops or dust in their optical paths. Image restoration in such a case is vital to achieve important surveillance tasks. An interpolater may be used (step 124) that relates the part of the scene obscured by the passive target to itself in the other image and interpolates the disparity map around it to give it a good depth estimation. Further interpolation (step 126) can be performed in terms of intensity, texture, and optical flow, rendering the obscured part of the scene to resemble closely what it would look like had there been no passive target. Such an application shows that this invention is not restricted to conventional DAS in a car, but any stereovision system used in similar applications as discussed herein. In case raindrops are detected (step 128) a wiper activation signal is activated in step (130).

Once a BDR target is detected and located in an image, it can be tracked (step 132 in Figure 5) by one of two ways. If it obscures a textured scene where disparity is defined, the undefined disparity region caused by the BDR target is tracked in a small window around it. If the BDR target is laid over a smooth, non-textured scene, then its features can be tracked in a small neighbourhood window. This is very useful especially with raindrops. Raindrops move in lines across the windshield due either to their weight or the wind when the car is moving fast or both. This can be used to study the movement of raindrops on a car windshield to analyse the behavior of water drops and their movement and to study the current surface properties of the windshield. A common-view BDR target depth estimation can be performed in step 134.

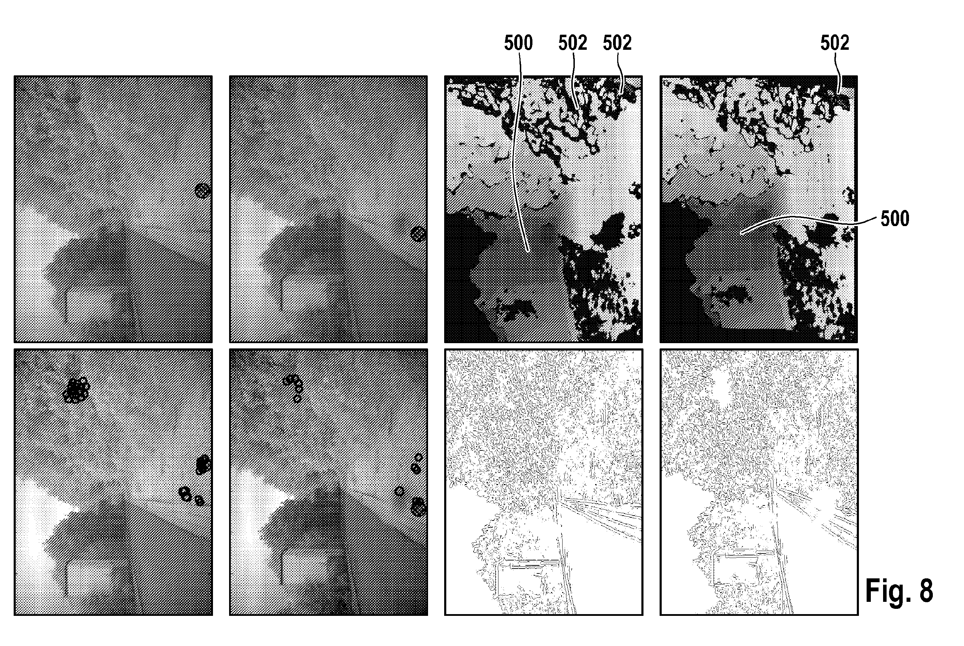

Figure 8 shows two top left images: The original left and right images, respectively, with the left image containing the emblem as one BDR target and the right image containing the emblems and two raindrops (above emblem and over the bushes to the top right) as BDR targets.

Two top right images: Left and right color-coded stereo disparity maps, respectively, with blue (regions 500) for far objects and red (regions 502) for close objects. Black indicates no disparity could be determined. Each disparity map is used to define the projected regions of its BDR target-caused undefined disparity regions in its corresponding image. Two bottom left images: Although no disparity is available at the raindrops or the emblem, they still provide strong features as indicated by the circles, which were provided by a feature detector (for clarity, not all features detected are shown). Also, the regions BDR targets obscure in one image show features in the second image (in the·shadow regions). In this case a SURF [Bay et al. 06] feature detector was applied to the projected regions of the undefined disparity regions of the disparity maps. It is to be noted how smooth scene regions such as the building on the left, road patches, and the sky yield no features in either image. Feature detectors other than SURF would provide similar results.

Two bottom right images: Edge detection is performed by BliSpTaDe so that each projected region can be classified as a BDR target region or a shadow region. Note how in this case each BDR target gives a match when contour matching is performed between its edges and the contour of the projected region in which it lies, while the scene it obscures in one image that shows in a shadow region in the second image fails the contour matching.

Figure 8 shows a stereo image pair with the right image containing a raindrop above the emblem and a very thin raindrop in the top right section of the image, and the emblem in the left image. When a disparity map is generated, the raindrops and the emblem cause undefined disparity regions in their locations in the disparity image, as for these regions no corresponding, matching texture can be found in the other image. For all three BDR targets in the right image, features with no disparity are detected at them in the right image. Also, in the scenes they obscure in the left image, features are detected with no disparity. Moreover, the emblem in the left image also yields features with no disparity and so does the scene it obscures in the right image. Features with no disparity within an undefined disparity region rule out this region as a possible smooth scene at those features. The occlusion thickness property dictates that along an epipolar line the thickness of the occlusion equals the absolute value of the difference of the adjacent disparities. The above undefined disparity regions do not obey this property and, hence, along with the fourth assertion, they are classified by BliSpTaDe as BDR target-related undefined disparity regions. It is to be noted that undefined disparity regions due to smooth scene regions (such as the building to the left, the road, and the sky) provide no features in them after SURF is applied. BliSpTaDe directly discards such regions as smooth scene regions and not possible BDR targets.

BliSpTaDe applies edge detection on all the projected regions of the BDR target-related undefined disparity regions onto both images, so the BDR targets can be located in their actual image. The upper raindrop exhibits contour edging and so does the scene it obscures in the left image. Contour matching is hence performed on both regions. As can be seen in Figure 6, the upper raindrop provides a match as its contour is very similar to that of the corresponding right image projected region of the undefined disparity region it causes, and is therefore classified as a BDR target by BliSpTaDe. The scene it obscures, on the other hand, fails the contour matching and is ruled out as a possible BDR target.

The lower raindrop right above the emblem is classified as a raindrop in the same way. An interesting property to note here is that the invention can detect different kinds of raindrops. The upper raindrop is more like a moisture film than an actual raindrop, simply blurring the texture it obscures without acting like a wide-angle lens, in contrast to the lower raindrop which is big and refracts light as can be told from the image (different intensity in the raindrop than that of the scene it obscures) where it acts as a wide-angle lens. Photometric models of raindrops assume spherical-section geometries that do not always exist in the real world. The invention is robust with regards to the shape or thickness a raindrop on the windshield has. Therefore, this invention can also detect moisture on the inner plane of the windshield (inside the car). In fact, any windshield obstruction inside the car is detected much the same way as if it had been on the outside. After BliSpTaDe and passive BDR target classification, a raindrop classifier developed and implemented analyses the closed-loop tendency of the raindrop contour to judge whether or not it actually is a raindrop.

Figure 8 also shows the emblem which lies in the common-view region of the BDR. No disparity-is' defined at it but the emblem still yields strong features in both images and so do the scenes it obscures in each image. Since these features have no disparity defined, and since they do not obey the occlusion property of thickness, the corresponding undefined disparity regions are deemed BDR target related. Again, BliSpTaDe uses edge detection to determine the actual location of the BDR targets in each image. Both emblems (in each image) and the scenes they obscure exhibit contour edging. Contour matching is then applied and since the emblems in both images have well-matching contours relative the corresponding projected regions of the undefined disparity regions they cause, a match occurs and the emblem is classified as a BDR target in each image at the appropriate position. On the other hand, contour matching is not satisfied at the scenes the emblem obscures in the images, and hence these images are ruled out as possible BDR targets.

In the embodiment to detect common-view BDR targets, the possible range of disparities at the emblem in the left image is determined for defining a proper matching window based on its image position in the left image. In addition, BDR targets detected in the right image are searched and only those lying on the same epipolar line as the left image emblem and lying within the matching window are compared. If a match occurs such as in the case of the emblem, it is determined that the BDR target is common-view and depth is calculated cheaply and reliably, otherwise it is classified as non-common-view.

The invention disclosed in this patent application can also be envisioned in more applications besides the ones already mentioned (cars, autonomous robots, surveillance systems). The system can be used in a railroad train in the front wagon. At a tram- or train-stop, pedestrians crowd the track of the locomotive and many would cross laterally relative the optical axes of the stereovision system and in the BDR. Achieving depth at such pedestrians is unattainable either because the pedestrian is subtended in the field, of view of just one camera of the stereovision system or lies so close to the system that computing disparity at the pedestrian is too expensive and slow. Our system solves this problem by detecting such active BDR targets and activating a warning signal so the conductor is alerted of the situation. Note that such a system is even more needed in a railroad vehicle (especially city trams) since usually no engine hood or other similar physical structure lies in the BDR region allowing for more active target presence there.

The invention disclosed in this patent application can also be a very useful component in a rear-view DAS application. Many regions in the space near the rear of a vehicle (car, train, tram, bus, truck, etc...) are blind spots to the driver and to the stereovision system (blind disparity). The invention allows for the detection of targets in this region (BDR targets) and also estimates depth for common-view BDR targets. The system would replace the many sensors used in today's rear-view DAS applications with one stereovision DAS.

The system and the model deployed for the detection of raindrops and other windshield obstructions and immediate hazards in the BDR are unique in that two different patches of the windshield are used to detect targets of interest. The advantage of stereovision is that it can be used for emulating behavior found in the human eye to detect those targets. Moreover, the BDR is a unique region in the environment of the vehicle that we mathematically defined in this patent application. Hence, any other inventions claiming the same use of stereovision DAS to detect BDR targets will have to use the approach disclosed herein. Since this invention does not work with an image of a focused-on patch of the windshield surface and instead captures two different nonintersecting windshield patches, it achieves BDR target detection using cues similar to blind spots in the human eye. Other than such a technique, the imaging of two different non-intersecting patches of the windshield is nonsensical and cannot be gotten out of any use.

For a target in the BDR to be detected, properties of that target that are not common to other targets in the common scene of the stereovision system have to be utilised in the detector system. The properties that distinguish BDR targets from other targets· in the common scene are discussed herein. If these properties are not used in a stereovision detector that maps two different non-intersecting patches of the windshield surface, then there is no need for stereovision because the only techniques that can be used then would be those common to monocular vision systems. In short, if a stereovision detector is to be used that does not focus on the same patch of the windshield surface, and that is configured as general-purpose stereovision DAS, then it has to use the above properties that are embedded in our invention or else the detector will not be able to use such a configuration successfully. Hence, detecting the realization of our invention on a product would be fairly easy.

## Claims

1. Method for using a stereovision camera arrangement (10) comprising at least two cameras (12, 14), each of the cameras (12, 14) acquires an image, so that a stereo image pair is captured by the stereovision camera arrangement (10) and stereo matching is performed to achieve a disparity map for at least one of the images, whereby a blind disparity region (BDR) (50, 52) is defined and at least one of the images together with at least one of the disparity maps is analysed to detect targets (23, 212, 216) within the BDR (50, 52).

2. Method according to claim 1, wherein the stereovision camera arrangement (10) is used in a motor vehicle, whereby the two cameras (12, 14) are installed behind a transparent plane, e.g. windshield (26), which is within the BDR (50, 52).

3. Method according to claim 2, wherein the stereovision camera arrangement (10) is used as a driver assistance system (DAS).

4. Method according to one of claims 1 to 3, wherein captured targets (212, 216) within the BDR (50, 52) are classified in active targets (23) and passive targets.

5. Method according to claim 4, wherein in case an active target is detected a further action, e.g. activation of a reaction/ warning signal, is performed.

6. Method according to one of claims 5, wherein further processing like interpolation is performed on passive targets.

7. Method according to one of claims 1 to 6, wherein raindrops (25)and other objects causing poor visibility are detected.

8. Method according to claim 7, wherein in case raindrops (25) are detected a wiper activation signal is activated.

9. Method according to one of claims 5 to 8, wherein targets (23, 212, 216) are tracked.

10. Method according to one of claims 1 to 9, wherein in case the target (23, 212, 216) in the BDR (50, 52) obscures a texture scene where disparity would be measurable otherwise, the undefined disparity region caused by the target (23, 212, 216) in the BDR is tracked in a small window around it.

11. Method according to one of claims 1 to 8, wherein in case the target (23, 212, 216) in the BDR (50, 52) is laid over a smooth, non textured scene, then its features are tracked in a small neighbourhood window.

12. Method according to one of claims 1 to 11, wherein a distinctive property of an occlusion that its thickness along an epipolar line is equal to the absolute value of difference in the disparities adjacent to it on either side is utilised to differentiate between occlusions and targets (23, 212, 216) in the BDR (50, 52).

13. Method according to one of claims 1 to 12, wherein features of targets (23, 212, 216) within the BDR (50, 52) are examined.

14. Method according to one of calims 1 to 13, wherein the cameras (12, 14) are focusing such that the depth of field region includes infinity.

15. Stereovision camera arrangement comprising at least two cameras (12, 14) being adapted to perform a method according to one of claims 1 to 15.

Fig. 1

Fig. 2

Fig. 3

EP 2 293 588 A1

12    14

Fig. 4

Fig. 5

Fig. 6

Fig. 7

Fig. 8

Europäisches
Patentamt

European
Patent Office

Office européen
des brevets

## EUROPEAN SEARCH REPORT

Application Number

EP 09 16 9012

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YANGHAI TSIN ET AL: "stereo Matching with Linear Superposition of Layers" IEEE TRANSACTIONS ON PATTERN ANALYSIS AND MACHINE INTELLIGENCE, IEEE SERVICE CENTER, LOS ALAMITOS, CA, US, vol. 28, no. 2, 1 February 2006 (2006-02-01), pages 290-301, XP001523326 ISSN: 0162-8828 | 1,15 | INV. H04N13/00 |
| Y | * page 292 - page 295 * ----- | 2-14 | |
| Y | US 2003/227378 A1 (NAKAI HIROAKI [JP] ET AL) 11 December 2003 (2003-12-11) * figure 2 * * paragraph [0036] * * paragraph [0010] * * paragraph [0078] - paragraph [0081] * * paragraph [0076] * * paragraph [0039] - paragraph [0047] * * paragraph [0056] * ----- | 2-14 | |
| | | | TECHNICAL FIELDS SEARCHED (IPC) |
| A | SCHMIDT J ET AL: "Dense disparity maps in real-time with an application to augmented reality" APPLICATIONS OF COMPUTER VISION, 2002. (WACV 2002). PROCEEDINGS. SIXTH IEEE WORKSHOP ON 3-4 DEC. 2002, PISCATAWAY, NJ, USA,IEEE, 3 December 2002 (2002-12-03), pages 225-230, XP010628753 ISBN: 978-0-7695-1858-9 * figure 1 * * page 225 - page 228 * ----- | 1,15 | H04N B60S G06T |
| A,D | US 2003/066948 A1 (OCKERSE HAROLD C [US] ET AL) 10 April 2003 (2003-04-10) * abstract * ----- | 1,15 | |

-/--

The present search report has been drawn up for all claims

| Place of search | Date of completion of the search | Examiner |
|---|---|---|
| The Hague | 27 January 2010 | Cooke, Edward |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 09 16 9012

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/077543 A1 (MIYOSHI TAKASHI [JP] ET AL) 13 April 2006 (2006-04-13) * abstract * ----- | 1,15 | |
| A | US 6 738 533 B1 (SHUM HEUNG-YEUNG [CN] ET AL) 18 May 2004 (2004-05-18) * abstract * ----- | 1,15 | |

TECHNICAL FIELDS
SEARCHED       (IPC)

The present search report has been drawn up for all claims

| Place of search | Date of completion of the search | Examiner |
|---|---|---|
| The Hague | 27 January 2010 | Cooke, Edward |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 16 9012

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2010

| Patent document cited in search report | | Publication date | Patent family member(s) | | Publication date |
|---|---|---|---|---|---|
| US 2003227378 | A1 | 11-12-2003 | JP | 3822515 B2 | 20-09-2006 |
| | | | JP | 2003296736 A | 17-10-2003 |
| | | | US | 2006182312 A1 | 17-08-2006 |
| US 2003066948 | A1 | 10-04-2003 | AT | 338959 T | 15-09-2006 |
| | | | AU | 2002362455 A1 | 14-04-2003 |
| | | | CA | 2460695 A1 | 10-04-2003 |
| | | | DE | 60214593 T2 | 13-09-2007 |
| | | | EP | 1456703 A2 | 15-09-2004 |
| | | | JP | 3970843 B2 | 05-09-2007 |
| | | | JP | 2005504963 T | 17-02-2005 |
| | | | MX | PA04002990 A | 15-07-2004 |
| | | | WO | 03029056 A2 | 10-04-2003 |
| | | | US | 2003201380 A1 | 30-10-2003 |
| US 2006077543 | A1 | 13-04-2006 | EP | 1637837 A1 | 22-03-2006 |
| | | | WO | 2004106858 A1 | 09-12-2004 |
| US 6738533 | B1 | 18-05-2004 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6617564 B2
- US 6596978 B2
- US 20070115357 A
- US 20060082879 A

**Non-patent literature cited in the description**

- **Garg, Kshitiz ; Nayar Shree K.** Vision and Rain. *Int. J. Comput. Vision,* 2007, vol. 75 (1), ISSN 0920-5691, 3-27
- **Tanaka, Yuu ; Yamashita, Atsushi ; Kaneko, Toru ; Miura, Kenjiro T.** Removal of Adherent Waterdrops from Images Acquired with a Stereo Camera System. *IEICE Transactions on Information and Systems,* 2006, 2021-2027
- **Bay, Herbert ; Tuytelaars, Tinne ; van Gool, L.** SURF: Speeded Up Robust Features. *9th European Conference on Computer Vision,* May 2006